# EUROPÄISCHE PATENTSCHRIFT

(11) **EP 3 686 062 B1**
(45) Veröffentlichungstag und Bekanntmachung des Hinweises auf die Patenterteilung: **01.09.2021**
(21) Anmeldenummer: 20153181.1
(22) Anmeldetag: 22.01.2020
(51) Int. Cl.: B60R 11/04

(54) **VORRICHTUNG FÜR EIN KRAFTFAHRZEUG**
DEVICE FOR A MOTOR VEHICLE
DISPOSITIF POUR VÉHICULE AUTOMOBILE

(30) Priorität: 25.01.2019 DE 102019101861
(43) Veröffentlichungstag der Anmeldung: 29.07.2020
(73) Patentinhaber: Witte Automotive GmbH, 42551 Velbert (DE)
(72) Erfinder: Nickel, Andreas, 45549 Sprockhövel (DE)
(74) Vertreter: Manitz Finsterwald Patent- und Rechtsanwaltspartnerschaft mbB

(56) Entgegenhaltungen:
- DE-A1-102015 105 771
- DE-A1-102017 105 964

## Beschreibung

Die vorliegende Erfindung betrifft eine Vorrichtung für ein Kraftfahrzeug mit einem Schutzelement, welches aus einer Schließstellung in eine Offenstellung verschwenkbar ist, mit einer Umgebungserfassungseinheit, welche durch eine Ausfahrbewegung in eine Aktivposition zur Bilderfassung und durch eine Einfahrbewegung in eine Ruheposition bringbar ist, in welcher die Umgebungserfassungseinheit von außen unzugänglich hinter dem in der Schließstellung befindlichen Schutzelement angeordnet ist, und mit einer an der Umgebungserfassungseinheit angreifenden Antriebseinheit zur Bewegung der Umgebungserfassungseinheit, wobei die Umgebungserfassungseinheit eine dem Schutzelement zugewandte Stirnseite und zwei sich daran anschließende Seitenflächen aufweist.

Bei einer bekannten Vorrichtung der eingangs genannten Art wird das Schutzelement durch ein Federelement in der Schließstellung gehalten und über die Stirnseite der ausfahrenden Umgebungserfassungseinheit aufgedrückt. Aufgrund einer mit der Zeit nachlassenden Rückstellkraft des Federelements und/oder während des Fahrbetriebs auftretender Vibrationen besteht bei diesen Vorrichtungen jedoch das Problem, dass die Umgebungserfassungseinheit in ihrer Ruheposition nicht dauerhaft zuverlässig vor äußeren Einflüssen, wie beispielsweise Staub und/oder Feuchtigkeit, geschützt werden kann.

Bekannt ist auch eine Vorrichtung, bei welcher die Umgebungserfassungseinheit und das Schutzelement gelenkig miteinander verbunden sind, d.h. also dauerhaft miteinander in Eingriff stehen. Die angetriebene Umgebungserfassungseinheit drückt in diesem Fall also nicht nur das Schutzelement in die Offenstellung auf, sondern zieht das Schutzelement auch wieder in die Schließstellung zurück. Hierdurch ist zwar grundsätzlich ein besserer Schutz der Umgebungserfassungseinheit vor äußeren Einflüssen gewährleistet. Allerdings besteht bei dieser Vorrichtung das Problem, dass eine Schwenkachse der Umgebungserfassungseinheit, eine Schwenkachse des Schutzelementes und eine Gelenksachse des Verbindungsgelenks zwischen Umgebungserfassungseinheit und Schutzelement für einen störungsfreien und geräuscharmen Betrieb der Vorrichtung exakt miteinander ausgerichtet sein müssen, was aufgrund von Toleranzen in der Praxis nicht immer der Fall sein wird.

Bei einer aus der DE 10 2015 105 771 A1 bekannten Vorrichtung nach dem Oberbegriff von Anspruch 1, ist ein Kamerahalter mit einer Führungsnut vorgesehen, in welche ein an einer Schutzklappe ausgebildeter Zapfen eingreift. Beim Verschwenken der Kamera wird die Schutzklappe durch den Zapfen mitgenommen und zwischen einer Aktivposition und einer Ruheposition verschwenkt.

Die DE 10 2017 105 964 A1 offenbart eine ausfahrbare Umgebungserfassungseinheit, welche einen Kameradeckel mittels eines stirnseitig angebrachten Vorsprungs beim Ausfahren in eine Aktivposition aufdrückt. Beim Einfahren wirkt ein Federelement auf den Kameradeckel, um diesen in eine Ruheposition zu drücken. Gegen Ende der Einfahrbewegung wird ein an dem Kameradeckel ausgebildeter Zapfen durch ein an der Umgebungserfassungseinheit ausgebildetes Mitnahmeelement erfasst und der Kameradeckel in seine Schließstellung gezogen.

Der Erfindung liegt die Aufgabe zugrunde, eine Vorrichtung der eingangs genannten Art zu schaffen, welche nicht nur die Umgebungserfassungseinheit in ihrer Ruheposition dauerhaft zuverlässig vor äußeren Einflüssen schützt, sondern auch eine einwandfreie mechanische Funktion dauerhaft gewährleistet.

Die Aufgabe wird durch eine Vorrichtung mit den Merkmalen des Anspruchs 1 und insbesondere dadurch gelöst, dass ein Aufdrückelement zum Aufdrücken des Schutzelements während des Ausfahrens der Umgebungserfassungseinheit und ein davon getrenntes Zuziehelement zum Zuziehen des Schutzelements während des Einfahrens der Umgebungserfassungseinheit an wenigstens einer der Seitenflächen ausgebildet sind.

Der Erfindung liegt der allgemeine Gedanke zugrunde, die Umgebungserfassungseinheit nicht dauerhaft und insbesondere nicht gelenkig mit dem Schutzelement zu verbinden, sondern stattdessen voneinander getrennte Aufdrück- und Zuziehelemente zur Bewegung des Schutzelements an der Umgebungserfassungseinheit vorzusehen. Durch den Verzicht auf eine Gelenkverbindung zwischen der Umgebungserfassungseinheit und dem Schutzelement wird ein zusätzlicher Freiheitsgrad geschaffen, was bedeutet, dass die Vorrichtung unempfindlicher gegenüber Toleranzen ist, insbesondere in der Ausrichtung einer Schwenkachse des Schutzelementes relativ zu einer Drehachse der Umgebungserfassungseinheit. Dies gewährleistet nicht nur eine dauerhaft zuverlässige mechanische Funktion der Vorrichtung, sondern minimiert auch die Geräuschentwicklung während des Betriebs der Vorrichtung, insbesondere während der Aus- und Einfahrbewegung der Umgebungserfassungseinheit. Durch die Verlagerung von Aufdrückelement und Zuziehelement an die Seitenfläche der Umgebungserfassungseinheit, mit anderen Worten durch die seitliche Anordnung von Aufdrückelement und Zuziehelement lässt sich darüber hinaus der Abstand zwischen der Umgebungserfassungseinheit und dem Schutzelement minimieren und somit eine kompaktere Bauform der Vorrichtung erreichen.

Die Umgebungserfassungseinheit kann beispielsweise eine Kamera, eine LiDAR-, LaDAR- oder Radareinrichtung oder einen sonstigen optischen Sensor umfassen, welcher dazu geeignet ist, die Fahrzeugumgebung zu erfassen. Des Weiteren ist es vorstellbar, dass die Umgebungserfassungseinheit hinter dem Emblem eines Fahrzeugherstellers angeordnet ist. Dabei kann das Schutzelement grundsätzlich durch das Emblem selbst gebildet sein. Bevorzugt ist das Schutzelement jedoch in Form eines separaten Kameradeckels ausgebildet, welcher gegebenenfalls zwischen dem Emblem und der Umgebungserfassungseinheit angeordnet ist.

Vorteilhafte Ausbildungen der Erfindung sind den Unteransprüchen, der Beschreibung und der Zeichnung zu entnehmen.

Gemäß einer Ausführungsform bildet das Aufdrückelement eine seitliche Rippe, durch welche das Schutzelement während des Ausfahrens der Umgebungserfassungseinheit über einen sich an der Rippe abstützenden ersten Nocken des Schutzelements in die Offenstellung schwenkbar ist.

Das Zuziehelement ist vorzugsweise temporär wirksam, insbesondere kann es lediglich während einer Endphase der Einfahrbewegung der Umgebungserfassungseinheit wirksam werden, d.h. wenn sich die einfahrende Umgebungserfassungseinheit ihrer Ruheposition annähert. Mit anderen Worten geraten das Zuziehelement und das Schutzelement erst kurz vor Erreichen der Ruheposition in Eingriff, nämlich ausschließlich um das Schutzelement endgültig in die Schließstellung zu ziehen, während das Zuziehelement und das Schutzelement während des überwiegenden Teils der Einfahrbewegung der Umgebungserfassungseinheit außer Eingriff stehen. Beispielsweise kann das Zuziehelement durch einen seitlichen Vorsprung gebildet sein.

Gemäß einer weiteren vorteilhaften Ausführungsform ist an der Seitenfläche der Umgebungserfassungseinheit ein Sicherungselement zur Sicherung des Schutzelements an der in der Aktivposition befindlichen Umgebungserfassungseinheit ausgebildet.

Bevorzugt ist das Sicherungselement von dem Aufdrückelement und dem Zuziehelement getrennt angeordnet. Beispielsweise kann es durch einen seitlichen Vorsprung der Umgebungserfassungseinheit gebildet sein.

Das Sicherungselement ist vorteilhafterweise temporär wirksam, insbesondere kann es lediglich während einer Endphase der Ausfahrbewegung der Umgebungserfassungseinheit wirksam werden, d.h. wenn sich die ausfahrende Umgebungserfassungseinheit ihrer Aktivposition annähert. Mit anderen Worten geraten das Sicherungselement und das Schutzelement erst kurz vor Erreichen der Aktivposition in Eingriff, während das Sicherungselement und das Schutzelement während des überwiegenden Teils der Einfahrbewegung der Umgebungserfassungseinheit außer Eingriff stehen.

Erfindungsgemäß weist das Schutzelement einen zweiten Nocken auf, der gemäß einer Ausführungsform durch das Sicherungselement hintergreifbar ist, wenn sich die Umgebungserfassungseinheit in der Aktivposition befindet, insbesondere derart, dass der erste und der zweiten Nocken des Schutzelements spielfrei zwischen dem Aufdrückelement und dem Sicherungselement aufgenommen sind.

Das Schutzelement weist einen zweiten Nocken auf, der durch das Zuziehelement hintergreifbar ist, wenn sich die Umgebungserfassungseinheit in der Ruheposition befindet, derart, dass der erste und der zweiten Nocken des Schutzelements spielfrei zwischen dem Aufdrückelement und dem Zuziehelement aufgenommen sind. Bevorzugt handelt es sich bei diesem zweiten Nocken um den zweiten Nocken, welcher auch mit dem Sicherungselement in Eingriff tritt.

Für eine ausgeglichene Kräfteverteilung sind/ist vorzugsweise an gegenüberliegenden Seitenflächen der Umgebungserfassungseinheit jeweils ein Aufdrückelement, ein Zuziehelement und/oder ein Sicherungselement ausgebildet.

Gemäß einer weiteren Ausführungsform weist das Schutzelement wenigstens einen Fortsatz auf, welcher mit einer Seitenfläche der Umgebungserfassungseinheit überlappt und an welchem ein erster Nocken und/oder ein zweiter Nocken ausgebildet sind/ist.

Für eine ausgeglichene Kräfteverteilung weist das Schutzelement vorteilhafterweise zwei Fortsätze auf, welche mit gegenüberliegenden Seitenflächen der Umgebungserfassungseinheit überlappen und an welchen jeweils ein erster und/oder ein zweiter Nocken ausgebildet sind/ist.

Die oder jede Seitenfläche der Umgebungserfassungseinheit ist bevorzugt im Wesentlichen rechtwinklig zu dem Schutzelement orientiert.

Gemäß einer weiteren Ausführungsform ist die Umgebungserfassungseinheit um eine erste und eine zweite Drehachse drehbar gelagert. Hierdurch lassen sich Kamerabewegungen darstellen, welche über eine einfache Rotation hinausgehen und eine kompaktere Bauform der Vorrichtung insgesamt ermöglichen.

Dabei kann die erste Drehachse in einer, insbesondere gekrümmten, Kulisse verschiebbar geführt sein und/oder die zweite Drehachse an einem Schwenkarm angeordnet sein, welcher seinerseits um eine dritte Drehachse verschwenkbar ist.

Gemäß einer weiteren Ausführungsform umfasst die Antriebseinheit eine mit der Umgebungserfassungseinheit, insbesondere gelenkig, verbundene gekrümmte Zahnstange. Die Krümmung der Zahnstange, welche beispielsweise durch einen Antriebsmotor, insbesondere einen Elektromotor, angetrieben werden kann, trägt zu einer kompakteren Bauform der Vorrichtung insgesamt bei.

Ein besonders guter Schutz der in Ruheposition befindlichen Umgebungserfassungseinheit vor äußeren Einflüssen wird erreicht, wenn das Schutzelement durch die in Ruheposition befindliche Umgebungserfassungseinheit gegen ein Dichtungselement gezogen wird, welches im Bereich einer durch das Schutzelement zu verschließenden Gehäuseöffnung angeordnet ist. Vorteilhafterweise umgibt das Dichtungselement die Gehäuseöffnung zumindest annähernd vollständig.

Ferner kann ein Federelement vorgesehen sein, entgegen dessen Rückstellkraft das Schutzelement aus der Schließstellung in die Offenstellung verschwenkbar ist.

Nachfolgend wird die Erfindung rein beispielhaft anhand einer möglichen Ausführungsform unter Bezugnahme auf die beigefügte Zeichnung beschrieben.

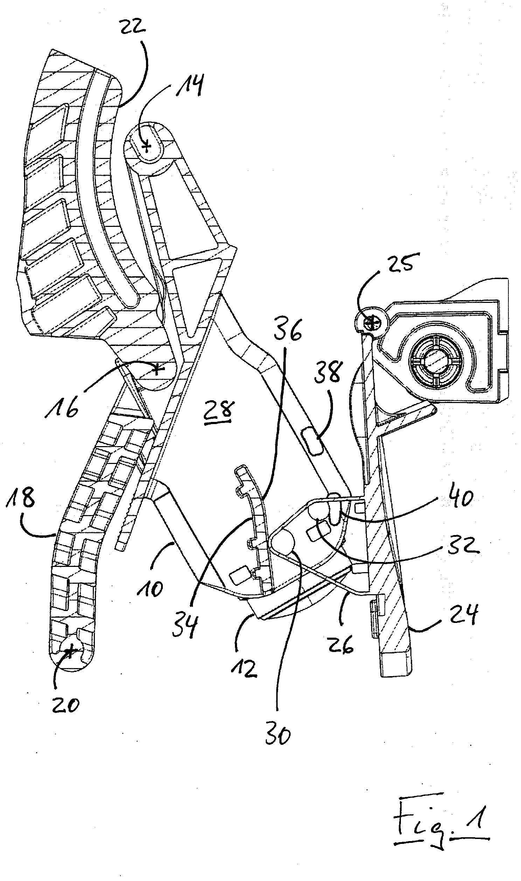

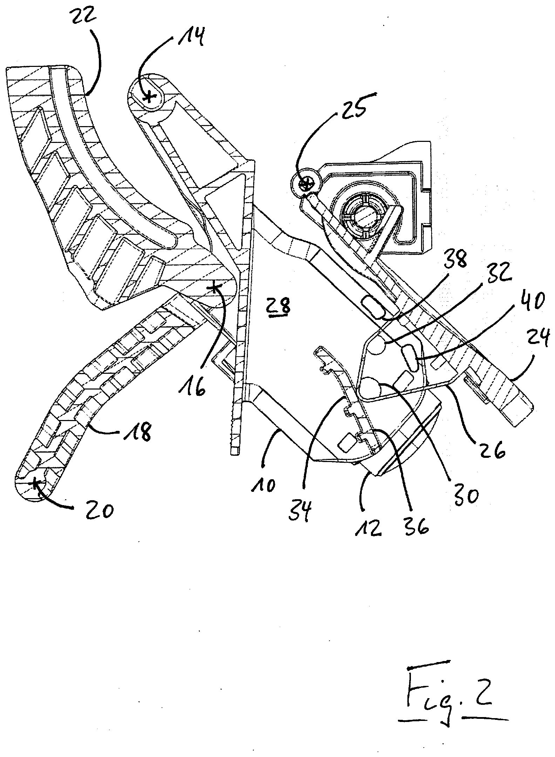

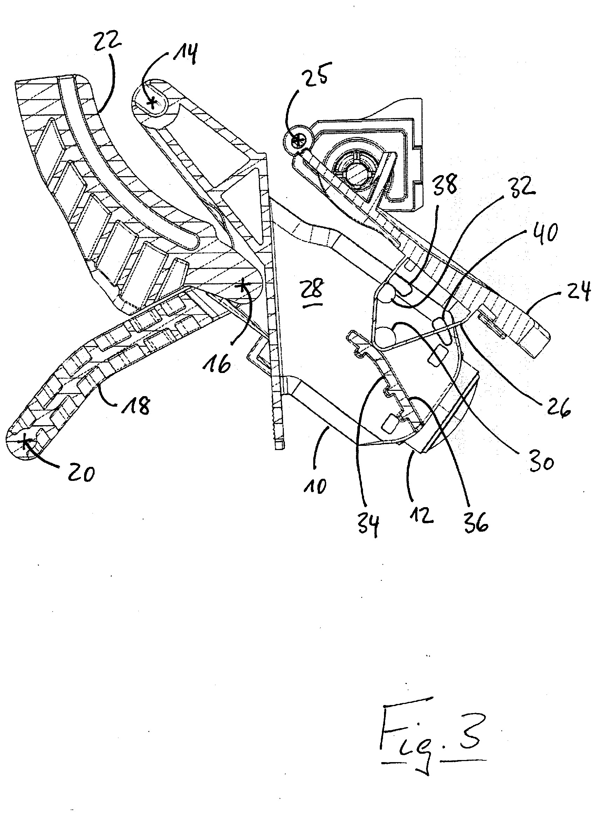

- Fig. 1 bis 3: zeigen teilweise Schnittansichten einer erfindungsgemäßen Vorrichtung während verschiedener Stadien der Ausfahrbewegung einer Umgebungserfassungseinheit, ausgehend von einer Ruheposition (Fig. 1) bis zu einer Aktivposition zur Bilderfassung (Fig. 3).

Die in den Figuren dargestellte Vorrichtung weist eine Umgebungserfassungseinheit 10 auf, welche im vorliegenden Ausführungsbeispiel eine Rückfahrkamera 12 für ein Kraftfahrzeug umfasst.

Die Umgebungserfassungseinheit 10 ist um eine erste Drehachse 14 und eine dazu beabstandete zweite Drehachse 16 drehbar gelagert. Dabei ist die erste Drehachse 14 entlang einer nicht dargestellten gekrümmten Kulisse verschiebbar geführt, während die zweite Drehachse 16 an einem ersten Ende eines Schwenkarms 18 angeordnet ist, dessen zweites Ende um eine dritte Drehachse 20 drehbar gelagert ist.

Die Umgebungserfassungseinheit 10 ist durch eine Ausfahrbewegung in eine Aktivposition zur Bilderfassung (Fig. 3) und durch eine Einfahrbewegung in eine Ruheposition (Fig. 1) bringbar. Die Aus- und Einfahrbewegungen der Umgebungserfassungseinheit 10 werden durch eine Antriebseinheit bewirkt, welche eine Zahnstange 22 umfasst, die mit der Umgebungserfassungseinheit 10 gelenkig verbunden ist. Im vorliegenden Ausführungsbeispiel greift die Zahnstange 22 derart im Bereich des ersten Endes des Schwenkarms 18 an der Umgebungserfassungseinheit 10 an, dass die zweite Drehachse 16 und die Gelenkachse der Zahnstange 22 zusammenfallen. Aufgrund der zweiachsigen Lagerung der Umgebungserfassungseinheit 10 und der gekrümmten Form der Zahnstange 22 vollführt die Umgebungserfassungseinheit 10 während der Aus- und Einfahrbewegungen eine Kombination aus Rotation und Translation.

In Ruheposition ist die Umgebungserfassungseinheit 10 in einem nicht näher dargestellten Gehäuse untergebracht, welches eine Gehäusewand aufweist, die eine Gehäuseöffnung begrenzt, durch welche die Umgebungserfassungseinheit 10 aus ihrer Ruheposition in ihre Aktivposition ausfahren bzw. aus ihrer Aktivposition in ihre Ruheposition einfahren kann. Die Gehäusewand trägt ein Dichtungselement, welches die Gehäuseöffnung zumindest annähernd vollständig umgibt.

An dem Gehäuse ist ein Kameradeckel 24 angebracht, welcher um eine vierte Drehachse 25 gelagert ist und entgegen der Rückstellkraft eines nicht dargestellten Federelements zwischen einer in Fig. 1 gezeigten Schließstellung und einer in Fig. 3 gezeigten Offenstellung verschwenkt werden kann. In seiner Schließstellung verschließt der Kameradeckel 24 die Gehäuseöffnung, um die in Ruheposition befindliche Umgebungserfassungseinheit 10 vor äußeren Einflüssen zu schützen. Der Kameradeckel 24 bildet mit anderen Worten also ein Schutzelement.

An einer der Umgebungserfassungseinheit 10 zugewandten Seite des Kameradeckels 24 sind zwei zueinander beabstandete Fortsätze 26 ausgebildet, die sich in Richtung der Umgebungserfassungseinheit 10 erstrecken und mit gegenüberliegenden Seitenflächen 28 der Umgebungserfassungseinheit 10 überlappen. Mit anderen Worten nehmen die Fortsätze 26 einen Teil der Umgebungserfassungseinheit 10 zwischen sich auf.

In einem dem Kameradeckel 24 entfernten Endbereich jedes Fortsatzes 26 ist ein dem jeweils anderen Fortsatz 26 zugewandter erster Nocken 30 ausgebildet. Außerdem ist jeder Fortsatz 26 mit einem zweiten Nocken 32 versehen, welcher ebenfalls dem jeweils anderen Fortsatz 26 zugewandt ist. Der zweite Nocken 32 ist zu dem ersten Nocken 30 desselben Fortsatzes 26 beabstandet und näher zu dem Kameradeckel 24 angeordnet.

An ihren gegenüberliegenden Seitenflächen 28 weist die Umgebungserfassungseinheit 10 jeweils eine Rippe 34 auf, welche eine Führungsbahn 36 für jeweils einen der ersten Nocken 30 bildet. Die Ausbildung der Führungsbahnen 36 und die Anordnung der ersten Nocken 30 sind derart aneinander angepasst, dass sich die ersten Nocken 30 stets, d.h. in jeder Position der Umgebungserfassungseinheit 10 an den Rippen 34 abstützen. Mit anderen Worten liegt der Kameradeckel 24 stets seitlich an der Umgebungserfassungseinheit 10 an.

Wird die Umgebungserfassungseinheit 10 aus der Ruheposition (Fig. 1) in die Aktivposition (Fig. 3) ausgefahren, so drückt sie den Kameradeckel 24 entgegen der Rückstellkraft des Federelements über ihre seitlichen Rippen 34 und die an den Fortsätzen 26 befindlichen ersten Nocken 30 auf. Die seitlichen Rippen 34 bilden somit also Aufdrückelemente für den Kameradeckel 24. Aufgrund der rotatorisch/- translatorischen Bewegung, welche die Umgebungserfassungseinheit 10 während der Ausfahrbewegung vollführt, bewegt sich jeder erste Nocken 30 währenddessen entlang der ihm zugeordneten Führungsbahn 36.

Nähert sich die Umgebungserfassungseinheit 10 ihrer Aktivposition, d.h. befindet sich die Ausfahrbewegung in ihrer Endphase, so geraten die zweiten Nocken 32 mit ersten Vorsprüngen 38 in Eingriff, die an den Seitenflächen 28 der Umgebungserfassungseinheit 10 ausgebildet sind, und zwar derart, dass der erste und zweite Nocken 30, 32 jedes Fortsatzes 26 zwischen der zugeordneten Rippe 34 und dem zugeordneten ersten Vorsprung 38 zu liegen kommen. Dabei ist die dem zweiten Nocken 32 zugewandte Fläche des zugeordneten ersten Vorsprungs 38 derart schräg angeordnet, dass der erste und zweite Nocken 30, 32 jedes Fortsatzes 26 am Ende der Ausfahrbewegung, d.h. also wenn die Umgebungserfassungseinheit 10 ihre Aktivposition einnimmt, spielfrei zwischen der zugeordneten Rippe 34 und dem zugeordneten ersten Vorsprung 38 aufgenommen sind. Durch die ersten Vorsprünge 38 ist der Kameradeckel 24 in dieser Situation gegen ein Abheben von der Umgebungserfassungseinheit 10 gesichert, d.h. er kann nicht weiter aufgeklappt werden. Die ersten Vorsprünge 38 bilden mit anderen Worten Sicherungselemente für den Kameradeckel 24.

Wird die Umgebungserfassungseinheit 10 wieder eingefahren, so geraten die zweiten Nocken 32 und die ersten Vorsprünge 38 wieder außer Eingriff und der Kameradeckel 24 wird lediglich durch das Federelement gegen die Umgebungserfassungseinheit 10 gedrückt, d.h. nur die ersten Nocken 30 stützen sich an den Rippen 34 ab.

Nähert sich die Umgebungserfassungseinheit 10 ihrer Ruheposition, d.h. befindet sich die Einfahrbewegung in ihrer Endphase, so geraten die zweiten Nocken 32 mit zweiten Vorsprüngen 40 in Eingriff, die an den Seitenflächen 28 der Umgebungserfassungseinheit 10 zu den ersten Vorsprüngen 38 jeweils beabstandet ausgebildet sind. Insbesondere geraten die zweiten Nocken 32 mit dem zweiten Vorsprüngen 40 derart in Eingriff, dass der erste und zweite Nocken 30, 32 jedes Fortsatzes 26 zwischen der zugeordneten Rippe 34 und dem zugeordneten zweiten Vorsprung 40 zu liegen kommen. Dabei ist die dem zweiten Nocken 32 zugewandte Fläche des zugeordneten zweiten Vorsprungs 38 derart schräg angeordnet, dass der erste und zweite Nocken 30, 32 jedes Fortsatzes 26 am Ende der Einfahrbewegung, d.h. also wenn die Umgebungserfassungseinheit 10 ihre Ruheposition einnimmt, spielfrei zwischen der zugeordneten Rippe 34 und dem zugeordneten zweiten Vorsprung 38 aufgenommen sind.

Durch die zweiten Vorsprünge 40 wird der Kameradeckel 24 bei in Ruheposition befindlicher Umgebungserfassungseinheit 10 aktiv gegen die die Gehäuseöffnung umgebende Dichtung gezogen, weshalb die zweiten Vorsprünge 40 auch als Zuziehelemente bezeichnet werden können. Der Kameradeckel 32 wird folglich nicht nur durch das Federelement gegen die Dichtung gedrückt, sondern zusätzlich durch die Zuziehelemente gegen die Dichtung gezogen, wodurch die Umgebungserfassungseinheit 10 dauerhaft zuverlässig gegen äußere Einflüsse geschützt ist und außerdem eine unerwünschte Geräuschentwicklung durch Klappern des Kameradeckels 24 vermieden wird.

### Bezugszeichenliste

- 10: Umgebungserfassungseinheit
- 12: Rückfahrkamera
- 14: erste Drehachse
- 16: zweite Drehachse
- 18: Schwenkarm
- 20: dritte Drehachse
- 22: Zahnstange
- 24: Kameradeckel
- 25: vierte Drehachse
- 26: Fortsatz
- 28: Seitenfläche
- 30: erster Nocken
- 32: zweiter Nocken
- 34: Rippe
- 36: Führungsbahn
- 38: erster Vorsprung
- 40: zweiter Vorsprung

## Patentansprüche

1. Vorrichtung für ein Kraftfahrzeug mit einem Schutzelement (24), welches aus einer Schließstellung in eine Offenstellung schwenkbar ist, mit einer Umgebungserfassungseinheit (10), welche durch eine Ausfahrbewegung in eine Aktivposition zur Bilderfassung und durch eine Einfahrbewegung in eine Ruheposition bringbar ist, in welcher die Umgebungserfassungseinheit (10) von außen unzugänglich hinter dem in der Schließstellung befindlichen Schutzelement (24) angeordnet ist, und mit einer an der Umgebungserfassungseinheit (10) angreifenden Antriebseinheit zur Bewegung der Umgebungserfassungseinheit (10), wobei die Umgebungserfassungseinheit eine dem Schutzelement (24) zugewandte Stirnseite und zwei sich daran anschließende Seitenflächen (28) aufweist,
wobei ein Aufdrückelement (34) zum Aufdrücken des Schutzelements (24) während des Ausfahrens der Umgebungserfassungseinheit und ein davon getrenntes Zuziehelement (40) zum Zuziehen des Schutzelements (24) während des Einfahrens der Umgebungserfassungseinheit (10) an wenigstens einer der Seitenflächen (28) ausgebildet sind,
**dadurch gekennzeichnet , dass**
das Schutzelement (24) einen zweiten Nocken (32) aufweist, der durch das Zuziehelement (40) hintergreifbar ist, wenn sich die Umgebungserfassungseinheit (10) in der Ruheposition befindet, derart, dass ein erster Nocken (30) und der zweite Nocken (32) des Schutzelements (24) spielfrei zwischen dem Aufdrückelement (34) und dem Zuziehelement (40) aufgenommen sind.

2. Vorrichtung nach Anspruch 1,
dadurch **g e k e n n z e ich n e t** , dass
das Aufdrückelement (34) eine seitliche Rippe bildet, durch welche das Schutzelement (24) während des Ausfahrens der Umgebungserfassungseinheit (10) über einen sich an der Rippe abstützenden ersten Nocken (30) des Schutzelements (24) in die Offenstellung schwenkbar ist.

3. Vorrichtung nach Anspruch 1 oder 2,
dadurch **g e k e n n z e ich n e t** , dass
das Zuziehelement (40) temporär wirksam ist, insbesondere während einer Endphase der Einfahrbewegung der Umgebungserfassungseinheit (10).

4. Vorrichtung nach zumindest einem der vorstehenden Ansprüche,
dadurch **g e k e n n z e ich n e t** , dass
das Zuziehelement (40) durch einen seitlichen Vorsprung gebildet ist.

5. Vorrichtung nach zumindest einem der vorstehenden Ansprüche,
dadurch **g e k e n n z e ich n e t** , dass
an der Seitenfläche (28) ein Sicherungselement (38) zur Sicherung des Schutzelements (24) an der in der Aktivposition befindlichen Umgebungserfassungseinheit (10) ausgebildet ist.

6. Vorrichtung nach Anspruch 5,
dadurch **g e k e n n z e ich n e t** , dass
das Sicherungselement (38) von dem Aufdrückelement (34) und dem Zuziehelement (40) getrennt angeordnet ist und/oder durch einen seitlichen Vorsprung der Umgebungserfassungseinheit (10) gebildet ist.

7. Vorrichtung nach Anspruch 5 oder 6,
dadurch **g e k e n n z e ich n e t** , dass
das Sicherungselement (38) temporär wirksam ist, insbesondere während einer Endphase der Ausfahrbewegung der Umgebungserfassungseinheit (10).

8. Vorrichtung nach zumindest einem der Ansprüche 5 bis 7,
dadurch **g e k e n n z e ich n e t** , dass
das Schutzelement (24) einen zweiten Nocken (32) aufweist, der durch das Sicherungselement (38) hintergreifbar ist, wenn sich die Umgebungserfassungseinheit (10) in der Aktivposition befindet, insbesondere derart, dass ein erster Nocken (30) und der zweite Nocken (32) des Schutzelements (24) spielfrei zwischen dem Aufdrückelement (34) und dem Sicherungselement (38) aufgenommen sind.

9. Vorrichtung nach zumindest einem der vorstehenden Ansprüche,
dadurch **g e k e n n z e ich n e t** , dass
an gegenüberliegenden Seitenflächen (28) der Umgebungserfassungseinheit (10) jeweils ein Aufdrückelement (34), ein Zuziehelement (40) und/oder ein Sicherungselement (38) ausgebildet sind/ist.

10. Vorrichtung nach zumindest einem der vorstehenden Ansprüche,
dadurch **g e k e n n z e ich n e t** , dass
das Schutzelement (24) wenigstens einen Fortsatz (26) aufweist, welcher mit einer Seitenfläche (28) der Umgebungserfassungseinheit (10) überlappt und an welchem ein erster Nocken (30) und/oder ein zweiter Nocken (32) ausgebildet sind/ist.

11. Vorrichtung nach zumindest einem der vorstehenden Ansprüche,
dadurch **g e k e n n z e ich n e t** , dass
das Schutzelement (24) zwei Fortsätze (26) aufweist, welche mit gegenüberliegenden Seitenflächen (28) der Umgebungserfassungseinheit (10) überlappen und an welchen jeweils ein erster und/oder ein zweiter Nocken (30, 32) ausgebildet sind/ist.

12. Vorrichtung nach zumindest einem der vorstehenden Ansprüche,
**dadurch gekennzeichnet , dass**
die oder jede Seitenfläche (28) der Umgebungserfassungseinheit (10) im Wesentlichen rechtwinklig zum Schutzelement (24) orientiert ist.

13. Vorrichtung nach zumindest einem der vorstehenden Ansprüche,
**dadurch gekennzeichnet , dass**
das Schutzelement (24) durch die in Ruheposition befindliche Umgebungserfassungseinheit (10) gegen ein Dichtungselement gezogen wird, welches im Bereich einer durch das Schutzelement (24) zu verschließen Gehäuseöffnung angeordnet ist, insbesondere welches die Gehäuseöffnung zumindest annähernd vollständig umgibt.

## Claims

1. An apparatus for a motor vehicle having a protective element (24) that can be pivoted from a closed position into an open position, having an environment detection unit (10) that can be moved into an active position for image detection through a moving-out movement and into a position of rest through a moving-in movement, with the environment detection unit (10) being arranged behind the protective element (24) present in the closure position, non-accessible from the outside, and having a drive unit engaging at the environment detection unit (10) for moving the environment detection unit (10), wherein the environment detection unit has a front side facing the protective element (24) and two side surfaces (28) adjoining the front side, wherein an opening element (34) for pushing open the protective element (24) during a moving-out of the environment detection unit and a retraction element (40) separate therefrom for retracting the protective element (24) during a moving-in of the environment detection unit (10) are formed at at least one of the side surfaces (28),
**characterised in that**
the protective element (24) has a second cam (32) that can be engaged from behind by the retraction element (40) when the environment detection unit (10) is in the position of rest in such a way that a first cam (30) and the second cam (32) of the protective element (24) are received without clearance between the opening element (34) and the retraction element (40).

2. An apparatus in accordance with claim 1,
**characterised in that**
the opening element (34) has a lateral rib via which the protective element (24) can be pivoted during the moving out of the environment detection unit (10) through a first cam (30) supported at the rib of the protective element (24).

3. An apparatus in accordance with claim 1 or claim 2,
**characterised in that**
the retraction element (40) is temporarily effective, in particular during an end phase of the moving-in movement of the environment protection unit (10).

4. An apparatus in accordance with at least one of the preceding claims,
**characterised in that**
the retraction element (40) is formed by a lateral projection.

5. An apparatus in accordance with at least one of the preceding claims, **characterised in that** a securing element (38) for securing the protective element (24) at the environment detection unit (10) present in the active position is formed at the side surface (28).

6. An apparatus in accordance with claim 5,
**characterised in that**
the securing element (38) is separately arranged from the pressing-open element (34) and the retraction element (40) and/or is formed by a lateral projection of the environment detection unit (10).

7. An apparatus in accordance with claim 5 or claim 6,
**characterised in that**
the securing element (38) is temporarily effective, in particular during an end phase of the moving-out movement of the environment detection unit (10).

8. An apparatus in accordance with one of the claims 5 to 7,
**characterised in that**
the protective element (24) comprises a second cam (32) behind which the securing element (38) can engage when the environment detection unit (10) is present in the active position, in particular in such a way that a first cam (30) and the second cam (32) of the protective element (24) are received without clearance between the pressing open element (34) and the securing element (38).

9. An apparatus in accordance with at least one of the preceding claims,
**characterised in that**
a respective pressing open element (34), a retraction element (40) and/or a securing element (38) is/are configured at oppositely disposed side surfaces (28) of the environment detection unit (10).

10. An apparatus in accordance with at least one of the preceding claims,
**characterised in that**
the protective element (24) has at least one extension (26) that overlaps with one of the side surfaces (28) of the environment detection unit (10) and at which a first cam (30) and/or a second cam (32) is/are configured.

11. An apparatus in accordance with at least one of the preceding claims,
**characterised in that**
the protective element (24) has two extensions (26) which overlap with mutually oppositely disposed side surfaces (28) of the environment detection unit (10) and at which a respective first cam and/or a second cam (30, 32) is/are configured.

12. An apparatus in accordance with at least one of the preceding claims,
**characterised in that**
the or each side surface (28) of the environment detection unit (10) is oriented essentially perpendicular to the protective element (24).

13. An apparatus in accordance with at least one of the preceding claims,
**characterised in that**
the protective element (24) can be drawn against a sealing element by the environment detection unit (10) present in the position of rest, with the sealing element being arranged in a region of a housing opening to be closed by the protective element (24), in particular with the sealing element approximately completely surrounding the housing opening.

## Revendications

1. Dispositif pour un véhicule automobile, comportant un élément de protection (24) qui peut être pivoté depuis une position fermée jusque dans une position ouverte, comportant une unité de détection d'environnement (10) qui peut être amenée par un mouvement de déploiement jusque dans une position active pour l'acquisition d'images et être amenée par un mouvement de rétraction jusque dans une position de repos dans laquelle l'unité de détection d'environnement (10) est disposée derrière l'élément de protection (24), situé en position fermée, de manière à être inaccessible de l'extérieur, et comportant une unité d'entraînement intervenant sur l'unité de détection d'environnement (10) et destinée à déplacer l'unité de détection d'environnement (10), l'unité de détection d'environnement présentant une face frontale tournée vers l'élément de protection (24) et deux faces latérales (28) qui s'y raccordent,
dans lequel
un élément de poussée (34) pour pousser sur l'élément de protection (24) en l'ouvrant pendant le déploiement de l'unité de détection d'environnement, et un élément de traction (40) séparé de celui-ci pour tirer l'élément de protection (24) en le fermant pendant la rétraction de l'unité de détection d'environnement (10) sont réalisés sur l'une au moins des faces latérales (28),
**caractérisé en ce que**
l'élément de protection (24) comprend une deuxième came (32) qui peut être engagée par l'arrière par l'élément de traction (38) lorsque l'unité de détection d'environnement (10) se trouve dans la position de repos, de telle sorte qu'une première came (30) et la deuxième came (32) de l'élément de protection (24) sont reçues sans jeu entre l'élément de poussée (34) et l'élément de traction (38).

2. Dispositif selon la revendication 1,
**caractérisé en ce que**
l'élément de poussée (34) forme une nervure latérale au moyen de laquelle l'élément de protection (24) peut être pivoté jusque dans la position ouverte par l'intermédiaire d'une première came (30) de l'élément de protection (24) supportée sur la nervure, pendant le déploiement de l'unité de détection d'environnement (10).

3. Dispositif selon la revendication 1 ou 2,
**caractérisé en ce que**
l'élément de traction (40) agit temporairement, en particulier pendant une phase finale du mouvement de rétraction de l'unité de détection d'environnement (10).

4. Dispositif selon l'une au moins des revendications précédentes,
**caractérisé en ce que**
l'élément de traction (40) est formé par une saillie latérale.

5. Dispositif selon l'une au moins des revendications précédentes,
**caractérisé en ce que**
un élément de blocage (38) est réalisé sur la face latérale (28) pour bloquer l'élément de protection (24) sur l'unité de détection d'environnement (10) située dans la position active.

6. Dispositif selon la revendication 5,
**caractérisé en ce que**
l'élément de blocage (38) est disposé séparément de l'élément de poussée (34) et de l'élément de traction (40) et/ou est formé par une saillie latérale de l'unité de détection d'environnement (10).

7. Dispositif selon la revendication 5 ou 6,
**caractérisé en ce que**
l'élément de blocage (38) agit temporairement, en particulier pendant une phase finale du mouvement de déploiement de l'unité de détection d'environnement (10).

8. Dispositif selon l'une au moins des revendications 5 à 7,
**caractérisé en ce que**
l'élément de protection (24) comprend une deuxième came (32) qui peut être engagée par l'arrière par l'élément de blocage (38) lorsque l'unité de détection d'environnement (10) se trouve dans la position active, en particulier de telle sorte qu'une première came (30) et la deuxième came (32) de l'élément de protection (24) sont reçues sans jeu entre l'élément de poussée (34) et l'élément de blocage (38).

9. Dispositif selon l'une au moins des revendications précédentes,
**caractérisé en ce que**
un élément de poussée (34), un élément de traction (40) et/ou un élément de blocage (38) sont/est réalisé(s) sur des faces latérales (28) opposées respectives de l'unité de détection d'environnement (10).

10. Dispositif selon l'une au moins des revendications précédentes,
**caractérisé en ce que**
l'élément de protection (24) comprend au moins un prolongement (26) qui chevauche une face latérale (28) de l'unité de détection de l'environnement (10) et sur lequel sont/est réalisée(s) une première came (30) et/ou une deuxième came (32).

11. Dispositif selon l'une au moins des revendications précédentes,
**caractérisé en ce que**
l'élément de protection (24) comprend deux prolongements (26) qui chevauchent des faces latérales (28) opposées de l'unité de détection d'environnement (10) et sur lesquels sont/est réalisée(s) une première et/ou une deuxième came respective (30, 32).

12. Dispositif selon l'une au moins des revendications précédentes,
**caractérisé en ce que**
la ou chaque face latérale (28) de l'unité de détection de l'environnement (10) est orientée de façon sensiblement perpendiculaire à l'élément de protection (24).

13. Dispositif selon l'une au moins des revendications précédentes,
**caractérisé en ce que**
l'élément de protection (24) est tiré par l'unité de détection d'environnement (10), située dans la position de repos, contre un élément d'étanchéité qui est disposé dans la zone d'une ouverture de boîtier à fermer par l'élément de protection (24), en particulier qui entoure l'ouverture de boîtier au moins approximativement complètement.
